(19) Europäisches Patentamt
European Patent Office
Office européen des brevets

(11) **EP 4 703 335 A1**

(12) **EUROPEAN PATENT APPLICATION**
published in accordance with Art. 153(4) EPC

(43) Date of publication:
**04.03.2026 Bulletin 2026/10**

(21) Application number: 24797131.0

(22) Date of filing: **25.04.2024**

(51) International Patent Classification (IPC):
*C04B 28/08* (2006.01)    *C04B 16/02* (2006.01)
*C04B 16/06* (2006.01)    *C04B 18/14* (2006.01)
*C04B 22/06* (2006.01)    *E04C 2/04* (2006.01)

(52) Cooperative Patent Classification (CPC):
**C04B 16/02; C04B 16/06; C04B 18/14;**
**C04B 22/06; C04B 28/02; C04B 28/08; E04C 2/04**

(86) International application number:
**PCT/JP2024/016276**

(87) International publication number:
**WO 2024/225386 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023  JP 2023074534**

(71) Applicant: **Kuraray Co., Ltd.**
**Kurashiki-shi, Okayama 710-0801 (JP)**

(72) Inventors:
• **IMAGAWA, Akira**
  **Okayama-shi, Okayama 702-8601 (JP)**
• **KATSUYA, Satoshi**
  **Okayama-shi, Okayama 702-8601 (JP)**

(74) Representative: **Müller-Boré & Partner**
**Patentanwälte PartG mbB**
**Friedenheimer Brücke 21**
**80639 München (DE)**

(54) **HARDENED BODY OF HYDRAULIC COMPOSITION**

(57)    The present invention relates to a hardened body of a hydraulic composition, the hardened body comprising: an alkali-resistant fiber; calcium silicate; and calcium aluminate, wherein a ratio of a pore volume in a range of from 11 to 300,000 nm to a pore volume in a range of from 6 to 10 nm in a pore size distribution of the hardened body determined by a mercury intrusion method is 14 or less.

EP 4 703 335 A1

**Description**

TECHNICAL FIELD

The present patent application claims Paris Convention priority based on Japanese Patent Application No. 2023-74534 (filed on April 28, 2023), the entire content of which is incorporated herein by reference.
The present invention relates to a hardened body of a hydraulic composition, and a building material board containing the hardened body.

BACKGROUND ART

Although a hydraulic composition containing cement is a material having high versatility, a large amount of carbon dioxide is generated in the process of producing cement, and therefore, in order to reduce the influence on climate change, reduction of the amount of cement used has been studied also in the civil engineering and construction fields.
For example, Patent Document 1 describes a curing composition using no cement, in which as a bonding material not using cement at all, a blast furnace slag fine powder and slaked lime, and as necessary, fly ash or silica fume are employed; and the bonding material is blended with a high performance AE water reducing agent such as a polycarboxylic acid-based water reducing agent, and as necessary, with a water-soluble admixture whose main component is a plurality of inorganic compounds such as calcium ions, magnesium ions, sodium ions, and alkali metal ions, and clear water.
Patent Document 2 describes an inorganic material board which is a hardened mat formed by dehydrating a slurry including blast furnace slag, gypsum, alkaline material, reinforcing fibers, and inorganic admixture, in which the content of cement is restricted to 0 to 11% by mass, and which is suitable for a building board.
In addition, Patent Document 3 describes a layered formed sheet including two or more formed sheets formed from a curable composition including a specific amount of blast furnace slag as an aluminosilicate source, an alkaline metal hydroxide, cellulose-based fibers, and alkali-resistant fibers.
Furthermore, Patent Document 4 describes a cured product of a curable composition including a specific amount of blast furnace slag as an aluminosilicate source, an alkali activator, and alkali-resistant fibers, wherein the hardened body has a specific water content.

PRIOR ART DOCUMENT

PATENT DOCUMENTS

Patent Document 1: JP-A-2012-171855
Patent Document 2: JP-A-2013-216534
Patent Document 3: WO 2022/004640 A
Patent Document 4: WO 2022/004643 A

SUMMARY OF THE INVENTION

PROBLEMS TO BE SOLVED BY THE INVENTION

However, a hardened body having higher bending strength and impact resistance while maintaining dimensional stability and low water absorbency is still required.
In view of the above, the present invention addresses the problem of providing a hardened body of a hydraulic composition, the hardened body having high impact resistance, high dimensional stability, low water absorbency, and high bending strength.

SOLUTIONS TO THE PROBLEMS

The present inventors made intensive and extensive studies for the purpose of solving the problem, and as a result, the present invention has been accomplished. That is, the present invention includes the following preferred embodiments.

[1] A hardened body of a hydraulic composition,

the hardened body comprising: an alkali-resistant fiber; calcium silicate; and calcium aluminate, wherein a ratio of a pore volume in a range of from 11 to 300,000 nm to a pore volume in a range of from 6 to 10 nm in a pore size distribution of the hardened body determined by a mercury intrusion method is 14 or less.

[2] The hardened body according to [1], wherein a total content of crystals of calcium oxide, calcium hydroxide, and calcium carbonate measured by powder X-ray diffraction is 15% by mass or less based on a mass of the hardened body excluding a fiber component.

[3] The hardened body according to [1] or [2], wherein the alkali-resistant fiber has an average fiber diameter of 3 to 900 $\mu$m.

[4] The hardened body according to any one of [1] to [3], wherein the alkali-resistant fiber has an aspect ratio of 30 to 2500.

[5] The hardened body according to any one of [1] to [4], wherein the alkali-resistant fiber has a tensile strength of 5 cN/dtex or more.

[6] The hardened body according to one of [1] to [5], wherein the alkali-resistant fiber is one or more fibers selected from the group consisting of polyvinyl alcohol-based fibers, polypropylene fibers, and polyethylene fibers.

[7] The hardened body according to any one of [1] to [6], wherein the hydraulic composition contains 8 to 72% by mass of cement, 72 to 18% by mass of slag, 0.5 to 12% by mass of slaked lime, and 0.1 to 5% by mass of the alkali-resistant fiber, based on a total solid content of the hydraulic composition.

[8] The hardened body according to [7], wherein the slaked lime has an average particle size of 3 to 600 $\mu$m.

[9] The hardened body according to any one of [1] to [8], further comprising 0.1 to 10% by mass of a pulp based on the mass of the hardened body.

[10] The hardened body according to any one of [1] to [8], wherein the hardened body does not contain a pulp, and the hardened body has a water absorption determined in accordance with JIS A 5430:2018 of 1 to 25%.

[11] The hardened body according to [9], wherein the hardened body has a water absorption determined in accordance with JIS A 5430:2018 of 5 to 40%.

[12] The hardened body according to any one of [1] to [11], wherein a pore volume in a range of from 6 to 10 nm in a pore size distribution of the hardened body determined by a mercury intrusion method is 0.05 mL/g or more.

[13] The hardened body according to any one of [1] to [12], wherein a pore volume in a range of from 11 to 300,000 nm in a pore size distribution of the hardened body determined by a mercury intrusion method is 0.3 to 3.0 mL/g.

[14] A building material board comprising the hardened body according to any one of [1] to [13].

EFFECTS OF THE INVENTION

According to the present invention, it is possible to provide a hardened body of a hydraulic composition, the hardened body having high impact resistance, high dimensional stability, low water absorbency, and high bending strength.

DETAILED DESCRIPTION

Hereinafter, embodiments of the present invention will be described in detail. The scope of the present invention is not limited to the embodiments described herein, and various modifications can be made within a scope not impairing the spirit of the present invention.

[Hardened body]

The hardened body of the present invention is a hardened body of a hydraulic composition, the hardened body comprising: an alkali-resistant fiber; calcium silicate; and calcium aluminate, wherein a ratio (B)/(A) of a pore volume (B) in a range of from 11 to 300,000 nm to a pore volume (A) in a range of from 6 to 10 nm in a pore size distribution of the hardened body determined by a mercury intrusion method is 14 or less.

The reason why the hardened body of the present invention has high impact resistance, high dimensional stability, low water absorbency, and high bending strength is not clear, but the following action mechanism is presumed. The hardened body of the present invention can be produced, for example, by hardening a hydraulic composition including cement, slag, slaked lime, and an alkali-resistant fiber. In the course of the hardening, not only does the cement undergo a hydration reaction, but the silicon and aluminum contained in the slag react with the slaked lime. The amount of calcium required is not so high because that reaction proceeds mainly on the surface of the slag unlike a usual geopolymer-like curing reaction. In addition, that reaction is relatively slow, and fine and dense pores are formed. It is difficult for moisture to penetrate into the fine pores. Additionally, because the fine pores hardly inhibit the adhesion between the fiber and the matrix, the reinforcing effect by the fiber is hardly reduced, and as a result, the hardened body can exhibit high strength and impact resistance. Furthermore, since the reaction proceeds on the slag surface without requiring a large amount of calcium, the amount of cement and slaked lime to be used can be reduced, and relatively large pores are less prone to be formed. As a result, it is presumed that the hardened body of the present invention has high impact resistance, high dimensional stability, low water absorbency, and high bending strength. However, the above is presumption, and the present invention is not limited to this action mechanism.

Calcium silicate and calcium aluminate are generated by the progress of hardening of a hydraulic composition including cement and slag, and are usually contained in a hardened body in the forms of hydrates, namely, calcium silicate hydrate and calcium aluminate hydrate, respectively.

The total content of calcium silicate and calcium aluminate contained as crystals in the hardened body is preferably 1% by mass or more, more preferably 2% by mass or more, and even more preferably 3% by mass or more based on the mass of the hardened body excluding the fiber component. The upper limit thereof is not particularly limited, and the total content may be 50% by mass or less, 40% by mass or less, 30% by mass or less, or 10% by mass or less. The total content is preferably 1 to 50% by mass, more preferably 2 to 40% by mass, and even more preferably 3 to 10% by mass based on the mass of the hardened body excluding the fiber component. When the total content is not less than the lower limit value and not more than the upper limit value, or within the range, the hardened body can have higher bending strength. The total content can be adjusted to be not less than the lower limit value and not more than the upper limit value, or within the above range, for example, by adjusting the amounts of pozzolanic reactive substances and calcium sources, such as cement, slag and slaked lime in the hydraulic composition.

The aforementioned total content, the contents of calcium oxide, calcium hydroxide, and calcium carbonate contained as crystals in the hardened body described later, and the total content of calcium oxide, calcium hydroxide, and calcium carbonate contained as crystals in the hardened body described later can be measured using powder X-ray diffraction, and for example, can be measured by the method described in Examples described later.

The alkali-resistant fiber has an action of increasing impact resistance and bending strength of the hardened body. Furthermore, it has an effect of preventing decrease in impact resistance and/or bending strength of the hardened body by suppressing cracking that may occur in the process of curing and drying the hydraulic composition.

The alkali-resistant fiber may be an inorganic fiber or an organic fiber as long as it has chemical durability against alkali. Examples of the alkali-resistant inorganic fiber include an alkali-resistant glass fiber, a steel fiber, a stainless steel fiber, and a carbon fiber. Examples of the alkali-resistant organic fiber include various alkali-resistant fibers such as a polyvinyl alcohol (hereinafter sometimes referred to as "PVA")-based fiber, a polyolefin-based fiber (e.g., a polyethylene fiber and a polypropylene fiber), an ultrahigh molecular weight polyethylene fiber, a polyamide-based fiber (e.g., polyamide 6, polyamide 6,6, and polyamide 6,10), an aramid fiber (particularly a para-aramid fiber), a polyparaphenylenebenzobisoxazole-based fiber [e.g., a polyparaphenylenebenzoxazole (PBO) fiber], a nylon fiber, an acrylic fiber, a rayon-based fiber (e.g., a polynosic fiber and a solvent-spun cellulose fiber), an acetate-based fiber, a polyphenylene sulfide fiber (PPS fiber), and a polyetheretherketone fiber (PEEK fiber). These types of alkali-resistant fibers may be used singly, or two or more of them may be used in combination. In the present description, the fact that the types of alkali-resistant fibers are different includes not only the fact that the types of systems constituting the fibers are different, such as a polyvinyl alcohol-based fiber vs a polyolefin-based fiber, but also the fact that the physical properties of materials constituting the fibers are different, such as polyvinyl alcohol-based fibers differing in the degree of polymerization and/or saponification.

Among these fibers, polyvinyl alcohol-based fibers, polypropylene fibers, and polyethylene fibers are preferably used from the viewpoint that more superior reinforcing properties can be imparted to the hardened body and these fibers can be produced at low cost. Therefore, in one embodiment of the present invention, the alkali-resistant fiber is preferably one or more fibers selected from the group consisting of polyvinyl alcohol-based fibers, polypropylene fibers, and polyethylene fibers.

In a preferred embodiment of the present invention, the alkali-resistant fiber is preferably a polyvinyl alcohol-based fiber. When the alkali-resistant fiber is a polyvinyl alcohol-based fiber, a hardened body having higher impact resistance or higher bending strength, particularly high bending strength can be obtained. The reason for this is not clear, and it is not intended to be limited to the following reasons. It, however, is considered that polyvinyl alcohol-based fibers produced by solution spinning are likely to be fibrillated because the entanglement of the molecular structure of the resin in the fibers is small, and when the hardened body is broken, the polyvinyl alcohol-based fibers absorb breaking energy by being fibrillated during the process, thereby providing the hardened body with impact resistance or bending strength, particularly bending strength.

The average fiber diameter of the alkali-resistant fiber is preferably 3 to 900 $\mu$m, more preferably 4 to 300 $\mu$m, even more preferably 5 to 50 $\mu$m, still even more preferably 5 to 30 $\mu$m, and most preferably 8 to 25 $\mu$m. In addition, the preferable average fiber diameter for each method is preferably 5 to 15 $\mu$m in a system without use of any aggregate and 15 to 40 $\mu$m in a system with use of an aggregate. When the average fiber diameter of the alkali-resistant fiber is within the above range, such an alkali-resistant fiber has sufficient fiber strength and can be industrially stably produced, and the fiber can be more uniformly dispersed in the hydraulic composition or the hardened body. The average fiber diameter of the alkali-resistant fiber can be determined by randomly taking out 100 fibers, measuring the diameter of each fiber at a lengthwise central portion with an optical microscope, and calculating an average of the measurements.

The average fiber length of the alkali-resistant fiber is preferably 1 to 40 mm, more preferably 1.5 to 18 mm, and even more preferably 2 to 10 mm from the viewpoint of achieving both good dispersibility of the fiber in the hydraulic composition and good reinforcing properties after hardening of the hydraulic composition. The average fiber length and the tensile strength described later of the alkali-resistant fiber can be determined in accordance with JIS L 1015:2010.

The aspect ratio of the alkali-resistant fiber is preferably 30 to 2500, more preferably 50 to 1000, and even more preferably 200 to 600 from the viewpoint of achieving both good dispersibility of the fiber in the hydraulic composition and good reinforcing properties of the hydraulic composition after hardening. The aspect ratio means a ratio of a fiber length to a fiber diameter (fiber length/fiber diameter). The aspect ratio of the alkali-resistant fiber can be calculated from the average fiber length and the average fiber diameter described above.

The tensile strength of the alkali-resistant fiber is preferably 5 cN/dtex or more, more preferably 8 cN/dtex or more, even more preferably 10 cN/dtex or more, and still even more preferably 13 cN/dtex or more. When the tensile strength of the alkali-resistant fiber is the above-mentioned lower limit value or more, the reinforcing performance for the hardened body can be enhanced. The upper limit value of the tensile strength of the alkali-resistant fiber is appropriately set according to the type of the fiber, but the tensile strength may be, for example, 30 cN/dtex or less, 25 cN/dtex or less, or 20 cN/dtex or less. The tensile strength is preferably 5 to 30 cN/dtex, more preferably 8 to 25 cN/dtex, even more preferably 10 to 20 cN/dtex, and still even more preferably 13 to 20 cN/dtex.

When a PVA-based fiber such as a vinylon fiber is used as the alkali-resistant fiber, a PVA-based fiber having the following characteristics may be used. The polymerization degree of the PVA-based polymer constituting the PVA-based fiber can be appropriately selected according to the intended use, and is not particularly limited. In consideration of mechanical properties and the like of fiber to be obtained, the viscosity average polymerization degree of the PVA-based polymer determined from the viscosity of a 30°C aqueous solution is preferably about 500 to about 20,000, more preferably about 800 to about 15000, and even more preferably about 1000 to about 10,000. Among them, from the viewpoint of the strength of the fiber to be obtained, the viscosity average polymerization degree of the PVA-based polymer is preferably 1000 or more, more preferably 1200 or more, even more preferably 1500 or more, and particularly preferably 1750 or more. The PVA-based polymer may be a medium-polymerization-degree product having a viscosity average polymerization degree of 1000 or more and less than 3000, or may be a high-polymerization-degree product having an average polymerization degree of 3000 or more.

The saponification degree of the PVA-based polymer may also be selected appropriately according to the intended use, and is not particularly limited. From the viewpoint of the dynamic properties of the resulting fiber, the saponification degree of the PVA-based polymer may be, for example, 95 mol% or more, preferably 98 mol% or more. The saponification degree of the PVA-based polymer may be 99 mol% or more, and may be 99.8 mol% or more. The saponification degree of the PVA-based polymer may be, for example, 95 to 100 mol%, preferably 98 to 100 mol% (e.g., 99 to 100 mol% or 99.8 mol% to less than 100 mol%). When the saponification degree of the PVA-based polymer is equal to or more than the above-mentioned lower limit value or within the above-mentioned range, the resulting fiber can have satisfactory mechanical properties, satisfactory process passing properties, satisfactory cost for the production, and the like.

The PVA-based fiber can be produced by dissolving such a PVA-based polymer in a solvent, spinning the resultant solution by any one of a wet process, a dry-wet process or a dry process, and subjecting the spun product to dry heat stretching. The wet spinning is a method of ejecting a spinning stock solution into a coagulation bath through a spinning nozzle directly. The dry-wet spinning is a method of ejecting a spinning stock solution into air or an inert gas located apart by an arbitrary distance temporality through a spinning nozzle and subsequently introducing the ejected stock solution into a coagulation bath. The dry spinning is a method of ejecting a spinning stock solution into air or an inert gas. After the spinning, the PVA-based fiber may be subjected to a stretching treatment, as necessary. In addition, the PVA-based fiber may be subjected to an acetalization treatment or the like that has been employed commonly for PVA-based fibers.

The solvent to be used for the spinning stock solution of the PVA-based fiber is not particularly limited as long as PVA can be dissolved in the solvent. Examples of the solvent include water, dimethyl sulfoxide (DMSO), dimethylformamide, dimethylacetamide and a polyhydric alcohol (e.g., glycerin, ethylene glycol, and triethylene glycol). These solvents may be used singly, or two or more of them may be used in combination. In the present invention, when wet spinning is performed, it is preferred to use water or an organic solvent as the solvent. Among these solvents, water and DMSO are particularly preferred from the viewpoint of the easiness of feeding and the influence on an environmental load. The concentration of the polymer in the spinning stock solution varies depending on the composition and polymerization degree of the PVA-based polymer and the type of the solvent, and is generally 6 to 60% by mass.

The above-mentioned solvent may be used also in dry spinning. In this case, either water or an organic solvent may be used.

Unless the effect of the present invention is impaired, the spinning stock solution may contain not only the PVA-based polymer but also additives and the like according to the intended use. Examples of the additives include boric acid, a surfactant, an antioxidant, a decomposition inhibitor, an anti-freezing agent, a pH modifier, a masking agent, a colorant, and an oil agent. These may be included singly, or two or more of them may be included in combination.

The solvent to be used in the coagulation bath may be selected appropriately according to the type of the solvent used in the spinning stock solution. When the spinning stock solution is an aqueous solution, an aqueous solution or an alkaline aqueous solution of an inorganic salt having a capability of curing a PVA-based polymer (e.g., sodium sulfate, ammonium sulfate, sodium carbonate, and sodium hydroxide) may be used as the coagulation bath. When the spinning stock solution is an organic solvent, for example, an organic solvent having a capability of curing a PVA-based polymer, e.g., alcohols such as methanol, ethanol, propanol, and butanol, and ketones such as acetone, methyl ethyl ketone, and methyl isobutyl ketone, may be used as the coagulation bath.

In the present invention, PVA-based fibers obtained by dry spinning or PVA-based fibers obtained by wet spinning from a spinning stock solution using water or an organic solvent as a solvent are preferable from the viewpoint of the tensile strength of the fibers.

To remove the solvent in the spinning stock solution from a coagulated raw yarn by extraction, the raw yarn may be passed through an extraction bath, or the raw yarn may be subjected to wet stretching simultaneously with the extraction. In addition, the fiber may be dried after the wet-stretching, and as necessary, may be further subjected to dry heat stretching. When stretching is carried out, the stretching may be carried out at a total draw ratio (i.e., a product of a draw ratio in wet stretching and a draw ratio after drying) of, for example, 5 to 25 times, preferably about 8 to about 20 times.

As the alkali-resistant fiber, a commercially available fiber may be used. Examples of the commercially available fiber include organic fibers such as polyvinyl alcohol-based fibers manufactured by Kuraray Co., Ltd. and polypropylene fibers manufactured by BarChip Inc.; and inorganic fibers such as glass fibers manufactured by Nippon Electric Glass Co., Ltd. and Taiheiyo Materials Corporation.

In one preferred embodiment of the present invention, the content of the alkali-resistant fiber is preferably 0.3% by mass or more, more preferably 0.5% by mass or more, even more preferably 1.0% by mass or more based on the mass of the hardened body, and preferably 5.0% by mass or less, more preferably 4.5% by mass or less, and even more preferably 4.0% by mass or less. The content of the alkali-resistant fiber is preferably 0.3 to 5.0% by mass, more preferably 0.5 to 4.5% by mass, and even more preferably 1.0 to 4.0% by mass based on the mass of the hardened body. When the content of the alkali-resistant fiber is not less than the lower limit value and not more than the upper limit value, or within the above range, higher impact resistance, higher bending strength, and higher dimensional stability can be attained in a hardened body produced.

The content of an alkali-resistant fiber in a hardened body can be calculated from the blending ratio of each component when preparing a hydraulic composition before hardening to form the hardened body. As a matter of course, the content of an alkali-resistant fiber in a hardened body can be determined by this calculation in both cases where the hardened body contains or does not contain an organic substance other than the alkali-resistant fiber.

The ratio (B)/(A) of the pore volume (B) in the range of 11 to 300,000 nm to the pore volume (A) in the range of 6 to 10 nm in the pore size distribution of the hardened body obtained by a mercury intrusion method is 14 or less, preferably 13 or less, more preferably 12 or less, and even more preferably 11 or less (for example, 10 or less). The ratio (B)/(A) is usually 3 or more, preferably 4 or more, more preferably 5 or more, and even more preferably 6 or more. The ratio (B)/(A) is usually 3 to 14, preferably 4 to 13, more preferably 5 to 12, and even more preferably 6 to 11 (for example, 6 to 10).

In one preferred embodiment of the present invention, the pore volume (A) in the range of 6 to 10 nm (generally referred to as gel voids) in the pore size distribution of the hardened body determined by a mercury intrusion method is preferably 0.05 mL/g or more, more preferably 0.08 mL/g or more, even more preferably 0.10 mL/g or more, still even more preferably 0.11 mL/g or more, and most preferably 0.12 mL/g or more, and may be 0.90 mL/g or less, 0.70 mL/g or less, 0.50 mL/g or less, or 0.30 mL/g or less. The pore volume (A) is preferably 0.05 to 0.90 mL/g, more preferably 0.08 to 0.70 mL/g, even more preferably 0.10 to 0.50 mL/g, still even more preferably 0.11 to 0.30 mL/g, and most preferably 0.12 to 0.30 mL/g. The pore volume (A) indicates a dense structure which is obtained via a reaction of a hardened body matrix and into which water cannot enter. When the pore volume (A) is not less than the lower limit value and not more than the upper limit value, or within the above range, the hardened body can have suitable denseness, and therefore the hardened body can have higher impact resistance, higher dimensional stability, lower water absorbency and/or higher bending strength. The pore volume (A) can be adjusted to a value not less than the lower limit value and not more than the upper limit value, or a value within the range, for example, by adjusting the proportions of cement, slag, slaked lime, and the like, and/or by adjusting conditions in molding the hardened body (e.g., curing conditions).

In one preferred embodiment of the present invention, the pore volume (B) in the range of 11 to 300,000 nm (generally referred to as capillary voids) in the pore size distribution of the hardened body determined by a mercury intrusion method is preferably 3.0 mL/g or less, more preferably 2.0 mL/g or less, even more preferably 1.9 mL/g or less, still even more preferably 1.5 mL/g or less, and particularly preferably 1.3 mL/g or less. The pore volume (B) indicates a coarse structure which can contain water and is formed via a reaction of a hardened body matrix. When the pore volume (B) is equal to or less than the upper limit value, the hardened body can have suitable denseness, and therefore the hardened body can have higher impact resistance, higher dimensional stability, lower water absorbency and/or higher bending strength. The lower limit value of the pore volume (B) is not particularly limited. The pore volume (B) may be 0.3 mL/g or more, 0.5 mL/g or more, 0.7 mL/g or more, or 1.0 mL/g or more. The pore volume (B) is preferably 0.3 to 3.0 mL/g, more preferably 0.5 to 2.0 mL/g, even more preferably 0.7 to 1.9 mL/g, still even more preferably 1.0 to 1.5 mL/g, and particularly preferably 1.0 to 1.3 mL/g. The pore volume (B) can be adjusted to a value not less than the lower limit value and not more than the upper limit value, or a value within the range, for example, by adjusting the proportions of cement, slag, slaked lime, and the like, and/or by adjusting conditions in molding the hardened body (e.g., pressing conditions), and/or by adjusting the particle size, or the like of the materials to be used.

Further, the ratio (B)/(A) has been defined as a parameter expressing a dense structure (the gel voids). The ratio (B)/(A) means the ratio of a coarse structure to a dense structure, and the smaller the numerical value is, the denser the structure can be interpreted to be. When the ratio (B)/(A) is not more than the above-mentioned upper limit value and not less than the above-mentioned lower limit value, the hardened body can have suitable denseness, and therefore the hardened body can have higher impact resistance, higher dimensional stability, lower water absorbency, and/or higher bending strength. The ratio (B)/(A) can be adjusted to a value not less than the lower limit value and not more than the upper limit value, for example, by adjusting the proportions of cement, slag, slaked lime, and the like, and/or by adjusting conditions in molding the hardened body (e.g., pressing conditions), and/or by adjusting the particle size, or the like of the materials to be used.

The pore volume (A), the pore volume (B), and the pore volume ratio (B)/(A) are determined by the methods described in Examples.

In one preferred embodiment of the present invention, the total content of the crystals of calcium oxide, calcium hydroxide, and calcium carbonate measured by powder X-ray diffraction is preferably 15% by mass or less, more preferably 12% by mass or less, even more preferably 10% by mass or less, and particularly preferably 8% by mass or less based on the mass of the hardened body excluding the fiber component. Calcium oxide and calcium hydroxide may be included in the hardened body mainly as unreacted substances of the reactants (for example, a mixture including cement, slag and slaked lime), and calcium carbonate may be included in the hardened body mainly as a reaction product of calcium hydroxide and carbon dioxide. Therefore, the fact that the total content is not more than the upper limit value means that the amount of unreacted substances in the hardened body is small, that is, the reactants have reacted in proper quantities. When the total content is not more than the upper limit value, the hardened body can have a dense structure and a desired or preferable pore volume ratio (B)/(A), and deterioration in physical properties (for example, impact resistance, dimensional stability, and/or low water absorbency) of the hardened body mainly caused by unreacted substances (especially, deterioration in physical properties over time) can be inhibited. The total content can be adjusted to not more than the upper limit value, for example, by adjusting the proportions of cement, slag, slaked lime, and the like, by adjusting slaked lime to have a specific average particle size in the hydraulic composition, and/or by adjusting the conditions during curing (temperature, humidity, and the like). The total content, and the content of calcium oxide crystals, the content of calcium hydroxide crystals, and the content of calcium carbonate crystals to be measured by the powder X-ray diffraction described later can be measured by the methods described in Examples described later. Since it is more preferable as the total content is lower, the lower limit value is not particularly limited and is equal to the detection limit value of the measuring device.

In one preferred embodiment of the present invention, the total content of the crystals of calcium oxide and calcium hydroxide, which are unreacted substances among the calcium components, measured by powder X-ray diffraction is preferably 12% by mass or less, more preferably 8% by mass or less, and even more preferably 4% by mass or less based on the mass of the hardened body excluding the fiber component.

Similarly, the lower limit value of the content of these components is not particularly limited, and is equal to the detection limit value of the measuring device.

In one embodiment of the present invention, the hardened body further contains pulp in an amount of preferably 0.1% by mass or more, more preferably 1% by mass or more, and even more preferably 2% by mass or more based on the mass of the hardened body. The pulp has an action of improving a yield in a papermaking process when a hardened body is produced by a papermaking method, and an action of increasing impact resistance and bending strength of the hardened body. Therefore, when the content of the pulp is not less than the aforementioned lower limit value, it is possible to increase the yield in the papermaking process when a hardened body is produced by a papermaking method, and to obtain a hardened body having higher impact resistance and higher bending strength. On the other hand, if the amount of the pulp is excessively large, the water absorbency of the hardened body may be deteriorated. Therefore, from the viewpoint of water absorbency, the content of the pulp is preferably 10% by mass or less, more preferably 8% by mass or less, and even more preferably 6.5% by mass or less based on the mass of the hardened body. When the content of the pulp is not more than the above upper limit value, a problem such as a decrease in the effect of inhibiting intrusion of corrosive substances (various organic acids such as chlorine, carbon dioxide, and sulfate ion) can also be avoided. The content of the pulp is preferably 0.1 to 10% by mass, more preferably 1 to 8% by mass, and even more preferably 2 to 6.5% by mass based on the mass of the hardened body. The content of the pulp can be calculated from the blending ratios of components when preparing a hydraulic composition before hardening to form the hardened body.

Examples of the pulp include natural pulp such as wood pulp, cotton linter pulp, and hemp.

The pulp that can be blended in the hydraulic composition may be one having or not having been subjected to a beating treatment. From the viewpoint of impact resistance and bending strength, it is preferable to use a pulp having been subjected to a beating treatment, and it is more preferable to use a pulp having a degree of beating of preferably 50 to 400 mL, more preferably 100 to 150 mL in terms of CSF value as measured in accordance with the Canadian standard of the drainability testing method of JIS P 8121-1976.

Examples of the pulp include a needle leaf tree, a broadleaf tree, Manila hemp, paper bush (Edgeworthia chrysantha), paper mulberry (Broussonetia kazinoki), Ganpi (Diplomorpha sikokiana), Salago (Wikstroemia spp.), mulberry, straw, bamboo, reed grass, sabai, lalang grass, esparto, bagasse, sisal, kenaf, linter, banana, and waste paper. Examples of the needle leaf tree include needle leaf trees belonging to the families Taxodiaceae, Pinaceae, Cupressaceae and Araucariaceae. Examples of the broadleaf tree include broadleaf trees belonging to the family Ulmaceae, Fagaceae, Myrtaceae, Cercidiphyllaceae, Oleaceae, Rutaceae, Betulaceae, Aceraceae, Juglandaceae, Tiliaceae, Araliaceae, Sapotaceae, Celastraceae, Apocynaceae, Verbenaceae, Magnoliaceae and Sterculiaceae. These pulps may be bleached pulp or unbleached pulp. These pulps may be used singly, or two or more of them may be used in combination.

[Method for Producing Hardened body]

The hardened body of the present invention is based on a hydraulic composition. That is, the hardened body of the present invention can be produced by hardening a hydraulic composition, and for example, can be produced by a method (papermaking method) including filtering, with a mesh, a slurry (hydraulic composition) prepared by suspending solids such as cement, slag, slaked lime, and alkali-resistant fibers in an aqueous medium, and molding and curing the sheet-shaped product obtained by filtration, or a method including molding a hydraulic composition prepared by suspending solids such as cement, slag, slaked lime, and alkali-resistant fibers in an aqueous medium using a mold.

<Papermaking Method>

Examples of the papermaking method include a cylinder papermaking method (Hatschek method) or a Fourdrinier papermaking method in which a hardened body is obtained by sequentially laminating a thin sheet-shaped product obtained by filtration on a making roll until a desired thickness is attained, and a flow-on papermaking method in which a thick slurry is fed onto a felt and sequentially laminated on a making roll until a desired thickness is attained once or several times, thereby affording a hardened body. From the viewpoint of uniformity of the hardened body and ease of thickness adjustment, the cylinder papermaking method or the Fourdrinier papermaking method is preferable, and from the viewpoint of possibility of mass production, the cylinder papermaking method is more preferable.

A method for producing a hardened body by a cylinder papermaking method usually includes:

a step of preparing a hydraulic composition by mixing cement, slag, slaked lime, an alkali-resistant fiber, and water, and, as necessary, optional components to be described later (a step of the preparation of a hydraulic composition);
a step of papermaking the obtained hydraulic composition using a cylinder mesh to obtain a papermaking sheet, and laminating the papermaking sheet until a desired thickness is attained (a step of the lamination of a papermaking sheet);
a step of squeezing off a liquid from the laminated papermaking sheet by applying pressure to the sheet, and molding the sheet (a step of squeezing and molding); and
a step of curing the sheet after squeezing (a curing step).

The method for preparing the hydraulic composition is not particularly limited. The hydraulic composition can be prepared by mixing components by a mixing means such as a publicly-known or conventional mixer. Examples of the mixing means include a mixer having high stirring performance, and examples thereof include a vertical mixer, a blade mixer, a screw mixer, a cone mixer, and an AJITER type mixer which are used in a papermaking method.

The order of mixing the components is not particularly limited. From the viewpoint of uniform dispersion of the solid components in the hydraulic composition, it is preferable that when pulp is added, the pulp is first put into water and stirred, then, in an arbitrary order, cement, slag, slaked lime, and optional components other than the pulp when added are added and stirred, and finally, an alkali-resistant fiber is added.

Examples of cement include Portland cement such as ordinary Portland cement, high early strength Portland cement, ultra-high early strength Portland cement, and moderate heat Portland cement; alumina cement; blast furnace cement; silica cement; fly ash cement; and white Portland cement. These types of cement may be used singly, or two or more of them may be used in combination.

From the viewpoint of versatility and/or cost, it is preferable to use ordinary Portland cement. From the viewpoint of early strength development, it is preferable to use high early strength Portland cement or ultra-high early strength Portland cement. From the viewpoint of improving long-term strength, it is preferable to use blast furnace cement.

Cement as described above is commercially available, and examples of the commercially available product include Ordinary Portland Cement manufactured by Taiheiyo Cement Corporation.

The slag referred to herein means steel slag. Steel slag is roughly classified into blast furnace slag and steelmaking slag, and both of them can be used in the present invention. Blast furnace slag is preferred from the viewpoint of higher impact resistance, higher dimensional stability and lower water absorbency of the hardened body. Blast furnace slag includes air-cooled slag, which is crystalline, and granulated slag, which is amorphous, and both of them can be used in the present invention. From the viewpoint of further improving the strength of the hardened body or accelerating curing, it is preferable to use a granulated slag.

The blast furnace slag preferably has a Blaine specific surface area of 1000 to 9000 cm$^2$/g, more preferably 2000 to 8000 cm$^2$/g, and even more preferably 3000 to 7000 cm$^2$/g. When the blast furnace slag has a Blaine specific surface area within the above range, the blast furnace slag can have sufficient reaction sites and a suitable average particle size, so that the produced hardened body can exhibit higher impact resistance, higher dimensional stability and lower water absorbency. The Blaine specific surface area of the blast furnace slag can be adjusted to be within the above-mentioned range by, for example, pulverizing the blast furnace slag, then classifying the pulverized product, and using a specific fraction. The Blaine specific surface area of the blast furnace slag can be measured by, for example, a laser diffraction/-scattering method.

As the slaked lime, for example, solid slaked lime, slaked lime dissolved in water, or a combination thereof can be used, but the slaked lime to be used is not limited thereto.

In one embodiment of the present invention, it is preferable to use solid slaked lime as the slaked lime. Due to the use of solid slaked lime, the slaked lime can locally react with the slag near the surface of the slag, and a hardened body having suitable denseness can be obtained.

In one preferred embodiment, the average particle size of the slaked lime in the hydraulic composition is preferably 3 to 600 $\mu$m, more preferably 5 to 400 $\mu$m, even more preferably 7 to 200 $\mu$m, and particularly preferably 10 to 100 $\mu$m. When the average particle size is within the above range, a hardened body having more suitable denseness can be obtained. The average particle size can be adjusted to within the above range by pulverization and classification. The average particle size can be determined by a general method, and for example, the average particle size can be determined by measuring the equivalent circle diameter of 100 slaked lime particles at random with an optical microscope and calculating the average value of the measurements.

In another embodiment of the present invention, it is preferable to use slaked lime dissolved in water as the slaked lime. Examples of the slaked lime dissolved in water include an aqueous solution of slaked lime, for example, papermaking process circulation water (white water) in the case where a hardened body is produced by a papermaking method.

The papermaking process circulation water may include solid slaked lime, and such papermaking process circulation water can also be used as the slaked lime. A combination of an aqueous solution of slaked lime other than the papermaking process circulation water and solid slaked lime can also be used as the slaked lime. The slaked lime in these cases corresponds to a combination of solid slaked lime and slaked lime dissolved in water, and in one embodiment of the invention, such a combination is preferably used as the slaked lime.

Due to the use of slaked lime dissolved in water, or a combination of solid slaked lime and slaked lime dissolved in water, slaked lime is present in a sparsely distributed manner in the hydraulic composition, so that the slaked lime can locally react with the slag near the surface of the slag, and a hardened body having suitable denseness can be obtained.

The concentration of slaked lime in the aqueous solution of slaked lime or the papermaking process circulation water is preferably 3 to 12% by mass, more preferably 4 to 11% by mass, and particularly preferably 5 to 10% by mass from the viewpoint of suitable reactivity.

As the alkali-resistant fiber, the alkali-resistant fiber described in the preceding paragraph [Hardened body] can be used. Also for preferred embodiments of the alkali-resistant fiber, the preferred embodiments described in the preceding paragraph [Hardened body] are applied.

Examples of the optional components include, in addition to the pulp described above, non-reactive fillers such as mica, aggregates (e.g., fine aggregates such as silica sand, river sand, sea sand, mountain sand, and crushed sand, and coarse aggregates such as gravel and crushed stone), attapulgite, bentonite, wollastonite, sepiolite, light calcium carbonate, and heavy calcium carbonate; fly ash, silica fume, red mud; anionic polymer flocculants; and a combination of two or more thereof. When the hydraulic composition includes such optional components, the hardened body of the hydraulic composition also includes the corresponding optional components.

When the hydraulic composition includes silica fume, densification of the resulting hardened body can be achieved due to the pozzolanic reactivity and fine average particle size of the silica fume. The average particle size of the silica fume is usually 0.01 to 1.0 $\mu$m, preferably 0.05 to 0.5 $\mu$m, and more preferably 0.1 to 0.2 $\mu$m.

The solid concentration of the hydraulic composition is usually 55 to 6% by mass, preferably 40 to 8% by mass, and more preferably 25 to 10% by mass.

Based on the total solid content of the hydraulic composition, that is, based on the total mass of the components other than water in the hydraulic composition, the amount of the cement is preferably 8 to 72% by mass (more preferably 16 to 60% by mass, even more preferably 24 to 50% by mass), the amount of the slag is preferably 72 to 18% by mass (more preferably 66 to 24% by mass, even more preferably 60 to 36% by mass), the amount of the slaked lime is preferably 0.5 to 12% by mass (more preferably 2 to 11% by mass, even more preferably 3 to 10), the amount of the alkali-resistant fiber is preferably 0.1 to 5% by mass (more preferably 0.3 to 4.5% by mass, even more preferably 0.5 to 4.0), the amount of the pulp is preferably 0 to 10% by mass (more preferably 0.1 to 10% by mass, even more preferably 1 to 8% by mass, and still even more preferably 2 to 6.5% by mass), the amount of the fly ash is preferably 0 to 10% by mass (more preferably 1 to 8% by mass, even more preferably 2 to 6% by mass), the amount of the aggregate is preferably 0 to 50% by mass (more preferably 0 to 40% by mass, even more preferably 0 to 35% by mass), and the amount of the silica fume is preferably 0 to 15% by mass (more preferably 0 to 11% by mass, even more preferably 0 to 8% by mass). When the hydraulic composition includes an optional component other than the pulp, the fly ash, the aggregate, and the silica fume, the amount thereof may be appropriately selected according to the type of the optional component.

In one preferred embodiment, the amount of a strongly alkaline compound based on the total solid content of the hydraulic composition is preferably 1.0% by mass or less, more preferably 0.5% by mass or less, even more preferably 0.1% by mass or less, and particularly preferably 0% by mass. When the amount of the strongly alkaline compound is not more than the above-mentioned upper limit value or 0% by mass, a geopolymer-like curing reaction between the strongly alkaline compound and the slag, which can afford a porous hardened body, is less likely to occur, and thus a denser hardened body can be obtained, and such a hardened body can have high impact resistance, high dimensional stability, low water absorbency, and high bending strength.

The strongly alkaline compound includes alkali metal hydroxides such as sodium hydroxide, potassium hydroxide, and lithium hydroxide, alkali metal carbonates such as sodium carbonate and potassium carbonate, and combinations of two or more thereof, whereas it does not include alkaline earth metal hydroxides such as calcium hydroxide and alkaline earth metal carbonates.

Next, the hydraulic composition is charged into a feed tank of a wet papermaking machine, and the solid concentration of the hydraulic composition is usually adjusted to about 10 to about 1% by mass (preferably 8 to 3% by mass) with papermaking process circulation water. The hydraulic composition fed from the feed tank to a vat is scooped on the surface of a cylinder mesh by rotation of the cylinder mesh having an internal negative pressure disposed in the vat, thereby forming a papermaking sheet, and the sheet is conveyed to a making roll. The papermaking sheet is laminated with a making roll such that a desired thickness is attained, and the laminated papermaking sheet is cut into a prescribed length.

In one preferred embodiment, the yield in the papermaking process is preferably 85% or more, and more preferably 90% or more. When the yield is not less than the lower limit value, a higher bending strength, a high interlayer adhesion strength, and/or a lower dimensional change rate can be obtained. The yield can be adjusted to the lower limit value or more by adjusting the Blaine specific surface area of the slag, selecting the mesh size of the cylinder mesh, and/or adjusting the beating degree of a beaten pulp when added. From the viewpoint of achieving both the yield and the productivity, the mesh size of the cylinder mesh is preferably 45 to 55 mesh per inch. The yield in the papermaking process can be determined, for example, by the following method.

The slurry charged in a cylinder mesh is scooped up, and its mass (A1) is measured. The solid component is collected by filtration using a general filtration device (for example, a Nutsche and a suction bottle), dried in a dryer at 105°C for 12 hours or more until the dry mass becomes constant, and the mass (B1) of the solid component is measured. The concentration $C_1$ of the slurry charged in the cylinder mesh is determined by the following equation.

$$\text{Concentration } C_1 = (B1/A1) \times 100$$

Similarly, the slurry after passing through the cylinder mesh is scooped up, and its concentration $C_2$ is determined by the following equation.

$$\text{Concentration } C_2 = (B2/A2) \times 100$$

Here, A2 is the mass of the scooped slurry after passing through the cylinder mesh, and B2 is the mass of the solid component of the slurry.

The yield in the papermaking process is determined by the following equation.

$$\text{Yield (\%) in papermaking process} = \{(C_1 - C_2)/C_1\} \times 100$$

The number of the papermaking sheets to be laminated depends on the solid concentration of the hydraulic composition and the thickness of the hardened body to be produced, but is usually 12 to 18 when the thickness of the hardened body is about 6 mm.

Next, the liquid is squeezed off by applying pressure to the cut sheet with a press machine, whereby the sheet is molded.

The pressure applied by the press machine is preferably 2 to 30 MPa, more preferably 3 to 27 MPa, and particularly preferably 4 to 25 MPa. The time for applying the pressure is usually 10 to 60 minutes, preferably 15 to 50 minutes, and more preferably 20 to 40 minutes. By setting the pressure within the above range or setting the time for applying the pressure within the above range, a desired pore volume ratio (B)/(A) can be attained in the hardened body, and as a result, a hardened body having higher impact resistance, higher dimensional stability, lower water absorbency and/or higher bending strength can be obtained.

Subsequently, the sheet from which the liquid has been squeezed off is cured.

Hardening proceeds by curing. The hardening is caused by a hydration reaction (setting reaction) between cement and slag, but when moisture in the sheet evaporates, the hydration reaction may be inhibited, and the hardening may not proceed. Therefore, it is preferable to perform curing, as primary curing, in a high-humidity atmosphere where moisture in the sheet does not evaporate, that is, in an atmosphere having a relative humidity of preferably 30 to 100%, more preferably 50 to 100%, even more preferably 65 to 100%, still even more preferably 80 to 100%, and particularly preferably 90 to 100% (for example, 100%), and perform curing, as secondary curing, in a state where moisture in the sheet is more difficult to evaporate by putting the sheet in a container, a bag, or the like that does not allow moisture to pass or by sandwiching the sheet between plastic plates, plastic films (polyethylene sheets or the like), or metal plates in a high-humidity atmosphere (in an atmosphere having a relative humidity of preferably 30 to 100%, more preferably 40 to 90%, and even more preferably 50 to 80%).

The curing temperature is not particularly limited. The primary curing temperature is, for example, 10 to 90°C, preferably 30 to 80°C, and more preferably 40 to 80°C. The curing temperature may be changed halfway at a temperature within the above range. The secondary curing temperature is, for example, 10°C to 70°C, and preferably 20°C to 50°C.

The primary curing time depends on the composition of the hydraulic composition and the curing temperature, but is usually 6 hours to 48 hours, preferably 8 hours to 36 hours, and more preferably 12 hours to 24 hours. The secondary curing time is usually 1 day to 14 days.

In addition, water curing may be performed as secondary curing. In this case, the water temperature is usually 10 to 30°C, and the curing time is usually 8 hours to 13 days. After the water curing at a water temperature of 10 to 30°C is performed for 4 hours to 24 hours, the secondary curing described in the preceding paragraph may be performed for 2 days to 13 days.

A hardened body is obtained by drying after the secondary curing.

The drying method is not particularly limited as long as a uniformly dried hardened body is obtained. Normally, since the equilibrium water content of the hardened body (for example, the water content reached when the hardened body is stored in a well-ventilated room for 7 days or more) is about 6% by mass to about 10% by mass, the hardened body is dried such that the water content thereof reaches a water content similar to the equilibrium water content. The water content and equilibrium water content of the hardened body can be simply measured using a Kett moisture meter. Alternatively, the hardened body after drying is weighed ($W_{12}$), and then the hardened body dried to a constant weight in an air dryer with a stirrer at 105°C is weighed ($W_{13}$), and the water content can be determined from the following formula:

$$\{(W_{12} - W_{13})/W_{13}\} \times 100.$$

<Method Including Molding Using Mold>

The method involving molding using a mold usually includes:
a step of mixing cement, slag, slaked lime, an alkali-resistant fiber, water, and, as necessary, the previously described optional components to prepare a hydraulic composition, and any of the following (i) to (iv):

(i) a step of casting the resulting hydraulic composition into an opened mold (a casting method),
(ii) a step of pressing or sucking the hydraulic composition to dehydrate (a dehydration molding method),
(iii) a step of injecting the hydraulic composition into a closed mold (an injection molding method), and
(iv) a step of molding a certain shape by passing the hydraulic composition through a mouth ring (an extrusion molding method).

In the extrusion molding method, a vacuum extruder may be used. In addition, at the time of molding, pressure and/or vibration may be applied, as necessary, and the hydraulic composition may be pressed with a press using an upper face mold, a roll, or the like.

The step of preparing the hydraulic composition in the method including molding with a mold may be performed in the same manner as the step of preparing the hydraulic composition in the papermaking method. The resulting hydraulic composition may be set in a prescribed amount in a lower press mold, and may be dehydrated and molded by a press while pressure is applied. The pressure to be applied may be, for example, 1 to 30 MPa, and the pressing time may be 0.01 to 30 minutes.

The curing after the molding may be performed in the same manner as the curing step in the papermaking method. A hardened body is obtained by drying after the secondary curing. This drying method may also be performed in the same manner as the drying method in the papermaking method.

The impact strength of the hardened body in a dry state is preferably $3.0 \, kJ/m^2$ or more, more preferably $3.5 \, kJ/m^2$ or more, and even more preferably $4.0 \, kJ/m^2$ or more. The upper limit value of the impact strength of the hardened body in a dry state is not limited, but the impact strength in a dry state is usually $20.0 \, kJ/m^2$ or less. The impact strength of the hardened body in a dry state is preferably $3.0$ to $20.0 \, kJ/m^2$, more preferably $3.5$ to $20.0 \, kJ/m^2$, and even more preferably $4.0$ to $20.0 \, kJ/m^2$.

The impact strength of the hardened body in a water absorption state is preferably $5.0 \, kJ/m^2$ or more, more preferably $5.3 \, kJ/m^2$ or more, and even more preferably $5.5 \, kJ/m^2$ or more. The upper limit value of the impact strength of the hardened body in a water absorption state is not limited, but the impact strength in a water absorption state is usually $20 \, kJ/m^2$ or less. The impact strength of the hardened body in a water absorption state is preferably $5.0$ to $20.0 \, kJ/m^2$, more preferably $5.3$ to $20.0 \, kJ/m^2$, and even more preferably $5.5$ to $20.0 \, kJ/m^2$.

The dimensional change rate of the hardened body is preferably 0.20% or less, more preferably 0.16% or less, and even more preferably 0.12% or less. The lower limit value of the dimensional change rate of the hardened body is not limited, but the dimensional change rate is usually 0.01% or more. The dimensional change rate is preferably 0.01 to 0.20%, more preferably 0.01 to 0.16%, and even more preferably 0.01 to 0.12%.

When the hardened body is free of pulp, the water absorption of the hardened body determined in accordance with JIS A 5430:2018 is preferably 1 to 25%, more preferably 3 to 20%, and even more preferably 5 to 15%.

When the hardened body includes pulp, the water absorption of the hardened body determined in accordance with JIS A 5430:2018 is preferably 5 to 40%, more preferably 7 to 30%, and even more preferably 10 to 20%.

The bending strength of the hardened body in a dry state is preferably $7 \, N/mm^2$ or more, more preferably $10 \, N/mm^2$ or more, and even more preferably $15 \, N/mm^2$ or more. The upper limit value of the bending strength of the hardened body in a dry state is not limited, but the bending strength is usually $100 \, N/mm^2$ or less. The bending strength of the hardened body in a dry state is preferably $7$ to $100 \, N/mm^2$, more preferably $10$ to $100 \, N/mm^2$, and even more preferably $15$ to $100 \, N/mm^2$.

The bending strength of the hardened body in a water absorption state is preferably $6 \, N/mm^2$ or more, more preferably $10 \, N/mm^2$ or more, and even more preferably $14 \, N/mm^2$ or more. The upper limit value of the bending strength of the hardened body in a water absorption state is not limited, but the bending strength is usually $100 \, N/mm^2$ or less. The bending strength of the hardened body in a water absorption state is preferably $6$ to $100 \, N/mm^2$, more preferably $10$ to $100 \, N/mm^2$, and even more preferably $14$ to $100 \, N/mm^2$.

The physical properties (impact strength in a dry state, impact strength in a water absorption state, dimensional change rate, water absorption, bending strength in a dry state, and bending strength in a water absorption state) of the hardened body described above can be measured by the methods described in Examples.

Since the hardened body of the present invention has high impact resistance, high dimensional stability, low water absorbency, and high bending strength, it can be suitably used for building material boards such as inner wall materials, outer wall materials, roof materials, and floor materials of buildings. Therefore, the present invention also encompasses a building material board including the hardened body of the present invention, and a building material board made of the hardened body of the present invention.

EXAMPLES

Hereafter, the present invention will be described in further detail by way of examples, but the present invention is not limited by the examples at all. Physical properties in the examples and comparative examples were measured or evaluated by the following procedures.

<Contents of Crystals of Calcium Silicate, Calcium Aluminate, Calcium Oxide, Calcium Hydroxide, and Calcium Carbonate>

A hardened body was pulverized using a mortar, and fibers were removed from the pulverized product with tweezers. The pulverized product from which the fibers had been removed was analyzed by powder X-ray diffraction, whereby the contents of crystals of calcium silicate, calcium aluminate, calcium oxide, calcium hydroxide, and calcium carbonate contained in the hardened body were determined. The measurement conditions of powder X-ray diffraction were tube voltage: 40 kV, tube current: 15 mA, scanning range: 20 = 5 to 70°, step width: 0.01°, and scanning speed:

2°/min, and PDXL2 (manufactured by Rigaku Corporation) was used as software in Rietveld analysis.

In quantitative analysis, calcite, portlandite, and lime were appropriately set according to the phases contained in the sample in addition to alite, belite, ubicC3A, orthorhombic-C3A, C4AF, and corundum (internal standard), and the content of crystals of each mineral phase was quantified collectively. As the quantitative conditions of C3A, two types of polymorphs were set in terms of calculation, but the evaluation was performed as a C3A amount by summing both polymorphs.

<Pore Volume and Pore Volume Ratio>

Two test pieces each having a size of about 1 cm square were cut out from a hardened body to be measured, and dried at 105°C±5°C for 12 hours or more. Then, the test pieces were placed in a desiccator humidified with silica gel, and left to stand until the temperature reached 20°C±1.5°C. For these test pieces, the pore size distribution by the mercury intrusion method was measured using a mercury intrusion porosimeter ("MicroActive AutoPore V 9600" manufactured by Micromeritics Instrument Corporation). From the Log differential pore volume determined from the obtained pore size distribution, the pore volume (A) in the range of 6 to 10 nm and the pore volume (B) in the range of 11 to 300,000 nm of each test piece were determined. From the following equation, the ratio of the pore volume (B) in the range of 11 to 300,000 nm to the pore volume (A) in the range of 6 to 10 nm was calculated for each test piece, and the average value thereof was taken as the pore volume ratio (B)/(A) of the hardened body.

Pore volume ratio (B)/(A) = {pore volume (B) in range of 11 to 300,000 nm}/{pore volume (A) in range of 6 to 10 nm}

<Average Fiber Diameter, Aspect Ratio, and Tensile Strength of Alkali-Resistant Fiber>

The average fiber diameter of an alkali-resistant fiber was determined by randomly taking out 100 fibers, measuring the fiber diameter at the lengthwise central portion of each fiber with an optical microscope, and calculating the average value of the measurements.

The aspect ratio (fiber length/fiber diameter) of the alkali-resistant fiber was calculated from the average fiber length and the average fiber diameter. The average fiber length of the alkali-resistant fiber was determined in accordance with JIS L 1015:2010.

The tensile strength of the alkali-resistant fiber was determined in accordance with JIS L 1015:2010.

<Impact Strength>

From the hardened body to be measured, six Type 1 test pieces were cut out in accordance with JIS K 7111-1:2012.

In order to measure the impact strength in a dry state, first, three test pieces were dried for 72 hours in an air dryer with a stirrer set at 40°C. Subsequently, the test pieces taken out were placed in a desiccator humidified with silica gel, and left to stand until the temperature reached 20°C±1.5°C. The impact strength (with no notch) of each test piece was measured in accordance with JIS K 7111-1:2012, and the average value of the measurements was taken as the impact strength of the hardened body in a dry state.

In order to measure impact strength in a water absorption state, first, three test pieces were immersed in water at 20°C for 72 hours. Subsequently, the test pieces were taken out, and immediately after wiping off the water adhering to their surfaces, the impact strength (with no notch) of each test piece was measured in accordance with JIS K 7111-1:2012, and the average value of the measurements was taken as the impact strength of the hardened body in a water absorption state.

The impact strength in a dry state and that in a water absorption state were measured using a Charpy (digital) impact tester, model DG-CB manufactured by Toyo Seiki Seisaku-sho, Ltd.

<Dimensional Change Rate>

The dimensional change rate (length change rate) of the hardened body was measured in accordance with JIS A 5430:2018. Specifically, three strip-shaped test pieces having a length of about 160 mm and a width of about 50 mm were cut out from a hardened body to be measured, and then the test pieces were placed in a dryer, and the temperature in the dryer was maintained at 60°C±3°C for 24 hours. Thereafter, the test pieces were taken out, placed in a desiccator humidified with silica gel, and allowed to stand until the temperature reached 20°C±1.5°C. Next, a milky glass was bonded onto each test piece, marked lines were carved such that the distance between marked lines was about 140 mm, then the length between the marked lines was measured with a comparator having an accuracy of 1/500 mm, and the length measured was defined as Li (mm). Subsequently, the test piece was laid on end such that the longitudinal direction of the test piece was horizontal, and immersed in water at 20°C±1.5°C such that the upper end of the test piece was located about 30 mm below the water surface. After 24 hours, the test piece was taken out of the water, the water adhered to the surface of the test piece was wiped off, then the length between the marked lines was measured again, and the length measured was defined as $L_2$ (mm). The dimensional change rate (%) due to water absorption was calculated for each test piece by the following equation, and the average value of the calculations was taken as the dimensional change rate of the hardened body.

$$\text{Dimensional change rate} = \{(L_2 - L_1)/L_1\} \times 100$$

<Water Absorption>

The water absorption of a hardened body was measured in accordance with JIS A 5430:2018. Specifically, four strip-shaped test pieces having a length of about 180 mm and a width of about 50 mm were cut out from a hardened body to be measured, and then the test pieces were immersed in water at 20°C±1.5°C. After a lapse of 24 hours, the test pieces were taken out, water adhering to their surfaces was wiped off, and then the mass of each test piece (mass $W_{14}$ of the test piece in a water absorption state) was immediately measured. Next, the test pieces were placed in a dryer with a stirrer adjusted to 105°C±5°C, dried for 24 hours, then taken out, placed in a desiccator humidified with silica gel, and allowed to stand until the temperature reached room temperature 20°C±1.5°C. Thereafter, the mass of each test piece (mass $W_0$ of the test piece in a dry state) was measured. The water absorption (%) of each test piece was calculated by the following equation, and the average value of the calculations was taken as the water absorption of the hardened body.

$$\text{Water absorption} = \{(W_{14} - W_0)/W_0\} \times 100$$

<Bending Strength>

From a hardened body to be measured, eight strip-shaped test pieces having a length of about 180 mm and a width of about 50 mm were cut out.

To measure bending strength in a dry state, first, four test pieces were dried for 72 hours in an air dryer with a stirrer set at 40°C. Subsequently, the test pieces taken out were placed in a desiccator humidified with silica gel, and left to stand until the temperature reached 20±1.5°C. The bending strength of each test piece was measured in accordance with JIS A 1408:2017, and the average value of the measurements was taken as the bending strength of the hardened body in a dry state.

To measure bending strength in a water absorption state, first, four test pieces were immersed in water at 20°C for 72 hours. Subsequently, the test pieces were taken out, and immediately after wiping off the water adhering to their surfaces, the bending strength of each test piece was measured in accordance with JIS A 1408:2017, and the average value of the measurements was taken as the bending strength of the hardened body in a water absorption state.

The bending strength in a dry state and that in a water absorption state were measured under the conditions of a bending span of 14.6 cm and a test speed (loading head speed) of 20 mm/min by a central loading method using AUTOGRAPH "AG50kNX" manufactured by Shimadzu Corporation.

[Example 1]

Pulp (NBKP, "Cellofiber" manufactured by PALTEX Corporation, CSF value: 115 mL) was dispersed in water. To the resulting dispersion were added a water granulated blast furnace slag fine powder (manufactured by DC Co., Ltd.: Blaine specific surface area: 4000 cm$^2$/g), ordinary Portland cement (manufactured by Taiheiyo Cement Corporation: Ordinary Portland Cement), fly ash (manufactured by Yonden Business Co., Inc.: equivalent to JIS type II), and slaked lime (manufactured by Kochi Sekkai Kogyou Co., Ltd.: Industrial Slaked Lime No. 1, average particle size: 20 μm), and the mixture was mixed. To the resulting mixture was added polyvinyl alcohol-based fiber 1 (average fiber diameter: 14 μm, aspect ratio: 429, tensile strength: 14.3 cN/dtex, described as PVA1 in Table 1) as an alkali-resistant fiber, and the resulting mixture was further mixed. The mass proportion of each component was as shown in Table 1, and a hydraulic composition having a solid concentration of 16% by mass was obtained.

The resulting hydraulic composition was transferred to a feed tank of a constant feeding apparatus and fed from the feed tank to a cylinder mesh. The solid concentration of the hydraulic composition was adjusted to 4% by mass by circulating water for a papermaking process circulation water, and papermaking was performed using a mini Hatschek machine. Subsequently, 15 sheets of the papermaking sheet obtained in the cylinder mesh process were laminated with a making roll, and the laminated papermaking sheet was pressed for 20 minutes under application of a pressure of 5.0 MPa, whereby a liquid component was squeezed off. The sheet after squeezing off the liquid was put in a constant-temperature/constant-humidity curing apparatus and cured for 24 hours under the conditions of a temperature of 50°C and a saturated humidity (RH 98%), then wrapped with a wrapping sheet, and cured for 13 days under an environment of a temperature of 20°C and a humidity of 60% (cured for 14 days in total). The sheet from which the wrapping sheet had been removed was dried for 2 hours in a roll dryer type dryer set at a temperature of 120°C, affording a hardened body.

Physical properties of the hydraulic composition and the hardened body were measured and evaluated by the methods described above. The results are shown in Table 1.

[Example 2 and Comparative Examples 1 to 2]

A hydraulic composition and a hardened body thereof were obtained in the same manner as in Example 1 except that the materials to be blended and/or the amounts thereof were changed as described in Table 1, and physical properties of the hydraulic composition and the hardened body were measured and evaluated. The results are shown in Table 1.

[Example 3]

A hydraulic composition and a hardened body thereof were obtained in the same manner as in Example 2 except that the pressure applied to the laminated papermaking sheet was changed from 5.0 MPa to 10.0 MPa, and physical properties of the hydraulic composition and the hardened body were measured and evaluated. The results are shown in Table 1.

[Example 4]

A hydraulic composition and a hardened body thereof were obtained in the same manner as in Example 1 except that polyvinyl alcohol-based fiber 2 (average fiber diameter: 7 $\mu$m, aspect ratio: 571, tensile strength: 14.5 cN/dtex, described as PVA2 in Table 1) was used in place of polyvinyl alcohol-based fiber 1 as the alkali-resistant fiber, and the amounts of the alkali-resistant fiber and the fly ash were changed as shown in Table 1. Then, physical properties of the hydraulic composition and the hardened body were measured and evaluated. The results are shown in Table 1.

[Examples 5 to 6]

A hydraulic composition and a hardened body thereof were obtained in the same manner as in Example 1 except that polyvinyl alcohol-based fiber 3 (average fiber diameter: 14 $\mu$m, aspect ratio: 429, tensile strength: 12.6 cN/dtex, described as PVA3 in Table 1) or polypropylene fiber (average fiber diameter: 17 $\mu$m, aspect ratio: 353, tensile strength: 5.3 cN/dtex, described as PP in Table 1) was used in place of polyvinyl alcohol-based fiber 1 as the alkali-resistant fiber, and physical properties of the hydraulic composition and the hardened body were measured and evaluated. The results are shown in Table 1.

[Table 1]

| | Example 1 | Example 2 | Example 3 | Example 4 | Example 5 | Example 6 | Comparative Example 1 | Comparative Example 2 |
|---|---|---|---|---|---|---|---|---|
| Alkali-resistant fiber [parts by mass] (Type of fiber) | 2 (PVA1) | 2 (PVA1) | 2 (PVA1) | 1.5 (PVA2) | 2 (PVA3) | 2 (PP) | 2 (PVA1) | 2 (PVA1) |
| Pulp [parts by mass] | 3 | 3 | 3 | 3 | 3 | 3 | 3 | 3 |
| Slag [parts by mass] | 40 | 56 | 56 | 40 | 40 | 40 | 0 | 30 |
| Cement [parts by mass] | 46 | 30 | 30 | 46 | 46 | 46 | 90 | 50 |
| Slaked lime [parts by mass] | 4 | 4 | 4 | 4 | 4 | 4 | 0 | 15 |
| Fly ash [parts by mass] | 5 | 5 | 5 | 5.5 | 5 | 5 | 5 | 0 |
| Average particle size [μm] of slaked lime in hydraulic composition | 20 | 20 | 20 | 20 | 20 | 20 | 20 | 20 |
| Calcium silicate + calcium aluminate [% by mass] | 4.13 | 3.81 | 4.46 | 4.46 | 4.02 | 4.02 | 8.56 | 4.46 |
| Calcium oxide [% by mass] | 0.01 | 0.00 | 0.10 | 0.02 | 0.01 | 0.5 | 0.60 | 3.34 |
| Calcium hydroxide [% by mass] | 2.78 | 1.22 | 1.90 | 3.11 | 2.88 | 2.9 | 16.23 | 12.25 |
| Calcium carbonate [% by mass] | 4.23 | 4.44 | 3.46 | 4.50 | 4.43 | 4.5 | 3.21 | 4.12 |
| Calcium oxide + calcium hydroxide + calcium carbonate [% by mass] | 7.02 | 5.66 | 5.46 | 7.83 | 7.32 | 7.9 | 20.04 | 19.71 |
| Pore volume ratio (B)/(A) | 8.12 | 7.75 | 9.75 | 8.25 | 9.89 | 8.66 | 15.97 | 14.39 |
| Pore volume (A) [mL/g] in range of 6 to 10 nm | 0.1501 | 0.185 | 0.1242 | 0.149 | 0.1222 | 0.143 | 0.0747 | 0.1155 |
| Pore volume (B) [mL/g] in range of 11 to 300,000 nm | 1.219 | 1.4338 | 1.2113 | 1.229 | 1.209 | 1.239 | 1.1929 | 1.6609 |
| After curing for 14 days — Impact strength [kJ/m$^2$] in dry state | 4.2 | 4.6 | 4.3 | 3.1 | 4.1 | 4.3 | 4.0 | 4.4 |
| After curing for 14 days — Impact strength [kJ/m$^2$] in water absorption state | 6.1 | 5.8 | 5.4 | 4.1 | 5.9 | 6.3 | 5.2 | 5.1 |
| After curing for 14 days — Dimensional change rate [%] | 0.11 | 0.13 | 0.11 | 0.1 | 0.12 | 0.11 | 0.19 | 0.21 |
| After curing for 14 days — Water absorption [%] | 18.9 | 18.2 | 17.1 | 18.9 | 19.3 | 18.8 | 20.9 | 21.1 |
| After curing for 14 days — Bending strength [N/mm$^2$] in dry state | 32.1 | 31.3 | 32.5 | 30.9 | 31.1 | 26.0 | 34.0 | 35.2 |
| After curing for 14 days — Bending strength [N/mm$^2$] in water absorption state | 25.0 | 26.5 | 25.4 | 23.6 | 23.8 | 18.0 | 24.3 | 24.4 |

[Example 7]

3.5 parts by mass of pulp (NBKP, "Cellofiber" manufactured by PALTEX Corporation, CSF value: 115 mL) was dispersed in water. To the resulting dispersion were added 28 parts by mass of a water granulated blast furnace slag fine powder (manufactured by DC Co., Ltd.: Blaine specific surface area: 4000 $cm^2$/g), 43 parts by mass of ordinary Portland cement (manufactured by Taiheiyo Cement Corporation: Ordinary Portland Cement), 3 parts by mass of fly ash (manufactured by Yonden Business Co., Inc.: equivalent to JIS type II), 6 parts by mass of silica fume (EFACO manufactured by Tomoe Engineering Co., Ltd., average particle size: 2 $\mu$m), and 14.5 parts by mass of a non-reactive filler, and the mixture was mixed. To the resulting mixture was added 2 parts by mass of polyvinyl alcohol-based fiber 2 (average fiber diameter: 7 $\mu$m, aspect ratio: 571, tensile strength: 14.5 cN/dtex) as an alkali-resistant fiber, and the resulting mixture was further mixed. A hydraulic composition having a solid concentration of 16% by mass was obtained.
In the same manner as in Example 1 except that the hydraulic composition obtained was used, a hardened body thereof was obtained, and physical properties of the hydraulic composition and the hardened body were measured and evaluated.
Physical properties after curing for 14 days are shown below. Total content of calcium silicate and calcium aluminate: 8.81% by mass; content of calcium oxide: 1.55% by mass; content of calcium hydroxide: 0.32% by mass; content of calcium carbonate: 2.67% by mass; total content of calcium oxide, calcium hydroxide, and calcium carbonate: 4.54% by mass; pore volume ratio (B)/(A): 5.64; pore volume (A): 0.3407 mL/g; pore volume (B): 1.9203 mL/g; impact strength in a dry state: 3.55 kJ/$m^2$; impact strength in a water absorption state: 4.67 kJ/$m^2$; dimensional change rate: 0.15%; water absorption: 20.6%; bending strength in a dry state: 32.3 N/$mm^2$; bending strength in a water absorption state: 22.3 N/$mm^2$.

[Example 8]

To water were added 31.75 parts by mass of a water granulated blast furnace slag fine powder (manufactured by DC Co., Ltd.: Blaine specific surface area: 4000 $cm^2$/g), 28 parts by mass of ordinary Portland cement (manufactured by Taiheiyo Cement Corporation: Ordinary Portland Cement), 3.18 parts by mass of fly ash (manufactured by Yonden Business Co., Inc.: equivalent to JIS type II), 5 parts by mass of slaked lime (manufactured by Kochi Sekkai Kogyou Co., Ltd.: Industrial Slaked Lime No. 1, average particle size: 20 $\mu$m), and 31.16 parts by mass of silica sand (Silica Sand #5 manufactured by TOHOKU KEISYA Co., Ltd.; average particle size: 425 $\mu$m), and the mixture was mixed. To the resulting mixture was added 0.91 parts by mass of polyvinyl alcohol-based fiber 4 (average fiber diameter: 26 $\mu$m, aspect ratio: 231, tensile strength: 13.8 cN/dtex) as an alkali-resistant fiber, and the resulting mixture was further mixed. A hydraulic composition having a solid concentration of 16% by mass was obtained. The resulting hydraulic composition was set in a prescribed amount on a lower press mold, dehydrated and molded by pressing for 0.5 minutes with application of a pressure of 5 MPa, cured under the same conditions as in Example 1, and dried, affording a hardened body.
The physical properties of the hydraulic composition and hardened body obtained were measured and evaluated in the same manner as in Example 1.
Physical properties after curing for 14 days are shown below. Total content of calcium silicate and calcium aluminate: 5.01% by mass; content of calcium oxide: 1.93% by mass; content of calcium hydroxide: 3.2% by mass; content of calcium carbonate: 0.89% by mass; total content of calcium oxide, calcium hydroxide, and calcium carbonate: 6.02% by mass; pore volume ratio (B)/(A): 11.06; pore volume (A): 0.0693 mL/g; pore volume (B): 0.7661 mL/g; impact strength in a dry state: 3.8 kJ/$m^2$; impact strength in a water absorption state: 5.1 kJ/$m^2$; dimensional change rate: 0.14%; water absorption: 19.6%; bending strength in a dry state: 12.1 N/$mm^2$; bending strength in a water absorption state: 8.9 N/$mm^2$.

INDUSTRIAL APPLICABILITY

The hardened body of the present invention has high impact resistance, high dimensional stability, low water absorbency, and high bending strength. Therefore, it can be suitably used for building material boards such as inner wall materials, outer wall materials, roof materials, and floor materials of buildings, civil engineering members, and the like.

**Claims**

1.   A hardened body of a hydraulic composition,

   the hardened body comprising: an alkali-resistant fiber; calcium silicate; and calcium aluminate,
   wherein a ratio of a pore volume in a range of from 11 to 300,000 nm to a pore volume in a range of from 6 to 10 nm in a pore size distribution of the hardened body determined by a mercury intrusion method is 14 or less.

**2.** The hardened body according to claim 1, wherein a total content of crystals of calcium oxide, calcium hydroxide, and calcium carbonate measured by powder X-ray diffraction is 15% by mass or less based on a mass of the hardened body excluding a fiber component.

**3.** The hardened body according to claim 1, wherein the alkali-resistant fiber has an average fiber diameter of 3 to 900 $\mu$m.

**4.** The hardened body according to claim 1, wherein the alkali-resistant fiber has an aspect ratio of 30 to 2500.

**5.** The hardened body according to claim 1, wherein the alkali-resistant fiber has a tensile strength of 5 cN/dtex or more.

**6.** The hardened body according to claim 1, wherein the alkali-resistant fiber is one or more fibers selected from the group consisting of polyvinyl alcohol-based fibers, polypropylene fibers, and polyethylene fibers.

**7.** The hardened body according to claim 1, wherein the hydraulic composition contains 8 to 72% by mass of cement, 72 to 18% by mass of slag, 0.5 to 12% by mass of slaked lime, and 0.1 to 5% by mass of the alkali-resistant fiber, based on a total solid content of the hydraulic composition.

**8.** The hardened body according to claim 7, wherein the slaked lime has an average particle size of 3 to 600 $\mu$m.

**9.** The hardened body according to claim 1, further comprising 0.1 to 10% by mass of a pulp based on a mass of the hardened body.

**10.** The hardened body according to claim 1, wherein the hardened body does not contain a pulp, and the hardened body has a water absorption determined in accordance with JIS A 5430:2018 of 1 to 25%.

**11.** The hardened body according to claim 9, wherein the hardened body has a water absorption determined in accordance with JIS A 5430:2018 of 5 to 40%.

**12.** The hardened body according to claim 1, wherein a pore volume in a range of from 6 to 10 nm in a pore size distribution of the hardened body determined by a mercury intrusion method is 0.05 mL/g or more.

**13.** The hardened body according to claim 1, wherein a pore volume in a range of from 11 to 300,000 nm in a pore size distribution of the hardened body determined by a mercury intrusion method is 0.3 to 3.0 mL/g.

**14.** A building material board comprising the hardened body according to claim 1.

## INTERNATIONAL SEARCH REPORT

International application No.

**PCT/JP2024/016276**

### A. CLASSIFICATION OF SUBJECT MATTER

*C04B 28/08*(2006.01)i; *C04B 16/02*(2006.01)i; *C04B 16/06*(2006.01)i; *C04B 18/14*(2006.01)i; *C04B 22/06*(2006.01)i;
*E04C 2/04*(2006.01)i
FI:   C04B28/08 ZAB; C04B16/06 A; C04B16/06 E; C04B16/02 Z; C04B18/14 C; C04B22/06 Z; E04C2/04 F

According to International Patent Classification (IPC) or to both national classification and IPC

### B. FIELDS SEARCHED

Minimum documentation searched (classification system followed by classification symbols)

C04B28/08; C04B16/02; C04B16/06; C04B18/14; C04B22/06; E04C2/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2022/004640 A1 (KURARAY CO., LTD.) 06 January 2022 (2022-01-06)<br>claims 1-12 | 1-14 |
| A | WO 2022/004643 A1 (KURARAY CO., LTD.) 06 January 2022 (2022-01-06)<br>claims 1-10 | 1-14 |
| A | JP 62-226875 A (REDCO NV) 05 October 1987 (1987-10-05)<br>claims 1-11 | 1-14 |
| A | JP 2001-039754 A (KURARAY CO., LTD.) 13 February 2001 (2001-02-13)<br>claims 1-6 | 1-14 |
| A | JP 02-192442 A (TAKEDA PHARMACEUTICAL COMPANY LIMITED.) 30 July 1990<br>(1990-07-30)<br>claims 1-3 | 1-14 |

[✓] Further documents are listed in the continuation of Box C.   [✓] See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/016276**

| C. | DOCUMENTS CONSIDERED TO BE RELEVANT | |
|---|---|---|
| Category* | Citation of document, with indication, where appropriate, of the relevant passages | Relevant to claim No. |
| A | JP 54-139636 A (MATSUSHITA ELECTRIC WORKS, LTD.) 30 October 1979 (1979-10-30) claim 1 | 1-14 |

Form PCT/ISA/210 (second sheet) (July 2022)

**EP 4 703 335 A1**

### INTERNATIONAL SEARCH REPORT
**Information on patent family members**

International application No.

**PCT/JP2024/016276**

| Patent document cited in search report | | | Publication date (day/month/year) | Patent family member(s) | | | Publication date (day/month/year) |
|---|---|---|---|---|---|---|---|
| WO | 2022/004640 | A1 | 06 January 2022 | US claims 1-12 EP | 2023/0271881 4173787 | A1 A1 | |
| WO | 2022/004643 | A1 | 06 January 2022 | US claims 1-10 EP | 2023/0250023 4174042 | A1 A1 | |
| JP | 62-226875 | A | 05 October 1987 | US claims 1-11 CN | 4840672 87101966 | A A | |
| JP | 2001-039754 | A | 13 February 2001 | (Family: none) | | | |
| JP | 02-192442 | A | 30 July 1990 | (Family: none) | | | |
| JP | 54-139636 | A | 30 October 1979 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023074534 A
- JP 2012171855 A
- JP 2013216534 A
- WO 2022004640 A
- WO 2022004643 A